# EUROPÄISCHE PATENTANMELDUNG

(11) **EP 4 039 124 A1**
(43) Veröffentlichungstag der Anmeldung: **10.08.2022**
(21) Anmeldenummer: 22157670.5
(22) Anmeldetag: 14.01.2020
(51) Int. Cl.: A45C 11/20, A45D 40/00, A45D 40/24, A47J 36/06, A47J 36/20, A61J 1/16, A61J 1/20, B65D 81/24, B65D 81/32, B65D 81/34, A45D 40/18

(54) **VERFAHREN UND BEHÄLTNIS ZUR ÜBERTRAGUNG VON INHALTSSTOFFEN AUS EINER DROGE IN EINE ZUBEREITUNG SOWIE BEHÄLTNIS**

(30) Priorität: 14.06.2019 AT 505352019
(62) Teilanmeldung aus: 20702186.6
(71) Anmelder: Haslauer, Paul, 5020 Salzburg (AT)
(72) Erfinder: Haslauer, Paul, 5020 Salzburg (AT)
(74) Vertreter: Wildhack & Jellinek

(57) **Zusammenfassung**

Die Erfindung betrifft ein Verfahren zur Übertragung von Inhaltsstoffen aus einer, insbesondere pflanzlichen, Droge (214, 314) in eine Zubereitung (5, 205, 305), insbesondere eine Zubereitung zur Einnahme oder Auftragung auf den menschlichen Körper, wobei ein Behältnis (1, 101, 201, 301) mit einer von der Umgebung abtrennbaren Innenatmosphäre bereitgestellt wird, wobei im Inneren des Behältnisses (1, 101, 201, 301) zumindest ein Aufnahmebereich (2, 102, 202, 302) für die Zubereitung (5, 205, 305) bereitgestellt wird, wobei zumindest ein vom Aufnahmebereich (2, 102, 202, 302) getrenntes Lagerkompartiment (7, 107, 207, 307), bereitgestellt wird, wobei das Lagerkompartiment (7, 107, 207, 307) zumindest teilweise von einer für Luft, und insbesondere für Wasser und Wasserdampf, permeablen Schicht (9, 108, 208, 308) begrenzt ist, wobei durch die Schicht (9, 108, 208, 308) eine Atmosphärenverbindung zwischen Aufnahmebereich und Lagerkompartiment (7, 107, 207, 307) ermöglicht ist, und wobei die Droge (214, 314) von der Zubereitung (5, 205, 305) getrennt in dem Lagerkompartiment (7, 107, 207, 307) angeordnet wird.

## Beschreibung

Die Erfindung betrifft ein Verfahren zur Übertragung von Inhaltsstoffen aus einer Droge in eine Zubereitung. Die Erfindung betrifft weiters ein Behältnis für Mahlzeiten und ein Kosmetikbehältnis zur Verwendung in einem solchen Verfahren.

Die Natur hält viele Inhaltsstoffe bereit, die der Mensch zu den unterschiedlichsten Zwecken für sich nutzbar gemacht hat. Dabei werden aufgrund der langen Haltbarkeit häufig Drogen, also natürliche, insbesondere getrocknete, Substrate und Teile von Pflanzen, Harzen o.ä., verwendet. Anwendung finden Drogen beispielsweise als Gewürze bei der Zubereitung von Mahlzeiten. Ein weiteres Einsatzgebiet ist die Verwendung als Wirkstoffe oder Duftstoffe in kosmetischen Zubereitungen.

Um eine Wirkung zu erzielen, ist es notwendig, die Inhaltsstoffe aus der Droge in eine Zubereitung zu übertragen, da die Zubereitung die Aufnahme der Inhaltsstoffe in den Körper erleichtert oder überhaupt erst ermöglicht. Die Inhaltsstoffe der Droge sollten dabei möglichst unverändert erhalten bleiben, damit die natürliche Wirksamkeit erhalten bleibt. Andere Bestandteile oder Verunreinigungen der Droge sollten jedoch nicht in die Zubereitung eingebracht werden. Da viele Inhaltsstoffe, wie beispielsweise ätherische Öle, hochwirksam sind, sollte eine ausgewogene Dosierung erfolgen. Inhaltsstoffe, wie beispielsweise ätherische Öle oder das in Zimt enthaltene Cumarin, können bei zu hoher Dosierung zu Reizungen oder unerwünschten Wirkungen führen. Diese Reizungen können bei einer akuten, sehr hohen Dosierung sofort, beispielsweise als Rötungen oder Unwohlsein, auffallen. Allerdings können auch bei niedrigeren Dosen, insbesondere bei langfristiger Anwendung, Reizungen auftreten, die nur schwer einer spezifischen Ursache zuzuordnen sind. Diese Reizungen können sich beispielsweise als Überempfindlichkeit der Haut, Juckreiz, Sodbrennen oder Schwindel äußern. Die Anwendung von Drogen sollte daher in hoher Qualität und in ausgewogenen Mengen erfolgen.

Aufgabe der Erfindung ist es daher, natürliche Inhaltsstoffe zur Anwendung am oder im Körper in hoher Qualität und ausgewogener Menge bereitzustellen.

Die Erfindung löst die Aufgabe bei einem Verfahren zur Übertragung von Inhaltsstoffen aus einer, insbesondere pflanzlichen, Droge in eine Zubereitung, insbesondere eine Zubereitung zur Einnahme oder Auftragung auf den menschlichen Körper. Es wird ein Behältnis mit einer von der Umgebung abtrennbaren Innenatmosphäre bereitgestellt, wobei im Inneren des Behältnisses zumindest ein Aufnahmebereich für die Zubereitung bereitgestellt wird.

Erfindungsgemäß ist vorgesehen, dass zumindest ein vom Aufnahmebereich getrenntes Lagerkompartiment, bereitgestellt wird, wobei das Lagerkompartiment zumindest teilweise von einer für Luft, und insbesondere für Wasser und Wasserdampf, permeablen Schicht begrenzt ist, wobei die Droge von der Zubereitung getrennt in dem Lagerkompartiment angeordnet wird.

Dadurch stehen die Inhaltsstoffe der Droge weitestgehend unverändert zur Anwendung im oder am Körper zur Verfügung. Eine Aufnahme von unerwünschten Verunreinigungen kann reduziert werden, da zumindest während der Lagerung vor Verwendung kein Kontakt der Droge mit der Zubereitung stattfindet. Dies verhindert eine Wirkung von Inhaltsstoffen der Zubereitung auf Inhaltsstoffe der Droge. Durch die räumliche Trennung kann eine Veränderung der Inhaltsstoffe der Droge durch einen Kontakt mit Konservierungsmitteln, Emulgatoren o.ä. daher vermieden werden, ebenso wie eine Übertragung möglicher Verunreinigungen. Da es nicht zu einer Umwandlung der ursprünglichen Struktur der Inhaltsstoffe kommt, kann bereits mit einer geringeren Menge eine gute Wirksamkeit erzielt werden. Dadurch erfolgt eine besonders sanfte Übertragung der Inhaltsstoffe auf die Zubereitung in ausgewogener Menge. Die Bildung von Abbau- oder Reaktionsprodukten kann vermieden werden, so dass durch das Verfahren eine besonders gut verträgliche, schonende und wirksame Zubereitung bereitgestellt werden kann. Im Rahmen der Anwendung der Zubereitung kann das Lagerkompartiment gegebenenfalls auch kurzfristig in die Zubereitung eingetaucht werden, wenn die Konzentration der Inhaltsstoffe in der Zubereitung weiter erhöht werden soll.

Die permeable Schicht ist dabei zumindest bei den für die in einem Anwendungsgebiet des Verfahrens typischen Bedingungen durchlässig, wobei üblicherweise eine perforierte bzw. gelochte Schicht, ein Gitter oder Netz verwendet wird. Die Innenatmosphäre bezeichnet einen gemeinsamen Gasraum, der zumindest zwischen Aufnahmebereich und Lagerkompartiment ausgebildet ist. Das Lagerkompartiment ist in dem Bereich, der an den gemeinsamen Gasraum angrenzt, zumindest teilweise von der permeablen Schicht begrenzt. Dadurch wird eine Übertragung der Inhaltsstoffe aus der Droge in den gemeinsamen Gasraum ermöglicht und aus dem gemeinsamen Gasraum in die Zubereitung. Die Konzentration der Inhaltsstoffe der Droge im gemeinsamen Gasraum bzw. in der Innenatmosphäre ist im Vergleich zur Umgebung wesentlich höher, sodass eine effektive Aufnahme der Inhaltsstoffe der Droge in die Zubereitung erfolgt.

Die Erfindung betrifft auch ein Behältnis für Mahlzeiten.

Bei der Zubereitung von Mahlzeiten finden Drogen in Form von Gewürzen besonders häufig Anwendung. Üblicherweise werden Gewürze direkt in oder auf das zuzubereitende Gericht gegeben. Dabei treten die Inhaltsstoffe der Gewürzdrogen in direkten Kontakt mit den Zutaten des Gerichts. Es kommt dabei zu einer Reaktion zwischen den Inhaltsstoffen der Gewürzdroge und den Inhaltsstoffen der Zubereitung, durch die es zu Veränderungen der Inhaltsstoffe der Gewürzdroge kommt, sodass Abbau- und Reaktionsprodukte entstehen. Diese Abbau- und Reaktionsprodukte haben oft nicht die gewünschte Wirkung. Zum einen können sie vermehrt zu Reizungen führen, andererseits weisen sie zum Teil nicht den gewünschten Geschmack oder die gewünschte Wirkung auf. Daher muss die Gewürzdroge in höherer Konzentration angewendet werden, welche zusätzlich zu Reizung beitragen kann.

Aufgabe dieses Aspekts der Erfindung ist es daher, ein Behältnis für eine schonende Würzung eines Gerichts bereitzustellen.

Die Erfindung löst die Aufgabe bei einem Behältnis für Gerichte, insbesondere zur Verwendung in einem zuvor beschriebenen Verfahren, wobei das Behältnis einen Aufnahmebereich zur Aufnahme des Gerichts und einen abnehmbaren Deckel umfasst. Das Behältnis und der Deckel sind dabei aus einem für Wasser, Wasserdampf und Luft undurchlässigen Material ausgebildet.

Erfindungsgemäß ist im Inneren des Behältnisses, insbesondere im Bereich des Deckels, ein vom Aufnahmebereich getrenntes Lagerkompartiment vorgesehen. Im Lagerkompartiment ist zumindest eine, insbesondere pflanzliche, Droge anordenbar oder angeordnet. Das Lagerkompartiment ist zumindest teilweise von einer für Luft, und insbesondere für Wasser und Wasserdampf, permeablen Schicht begrenzt, wobei der Aufnahmebereich mit dem Lagerkompartiment in Atmosphärenverbindung steht oder zur Ausbildung einer gemeinsamen Innenatmosphäre in Atmosphärenverbindung bringbar ist.

Das Behältnis ermöglicht eine besonders schonende Würzung der darin zubereiteten Gerichte. Im Inneren des Behältnisses ist eine Innenatmosphäre bzw. ein gemeinsamer Gasraum ausgebildet, wobei die Konzentration der Inhaltsstoffe der Droge im Inneren des Behältnisses im Vergleich zur Umgebung wesentlich höher ist. Die Zubereitung nimmt die Inhaltsstoffe der Droge aus dem Gasraum auf.

Das Behältnis ermöglicht zudem die Verwendung ganzer Drogenteile, also beispielsweise eines ganzen Krautes, für die Würzung eines Gerichts, ohne dass störende Reste im Gericht verbleiben, oder nachträglich entfernt werden müssten. Bei der Verwendung ganzer Drogenteile kann die Übertragung von Verunreinigungen noch besser vermieden werden, da gerade zerkleinerte Gewürzdrogen häufig mit Verunreinigungen belastet sind.

Die Schicht kann beispielsweise durch eine perforierte Fläche, vorzugsweise aus Edelstahl, oder durch ein Gitter oder ein Netz, vorzugsweise aus Organza, Edelstahl oder Gold ausgebildet sein.

Besonders geeignet ist das Behältnis für Fertiggerichte, da diese eine längere Lagerungsdauer haben als frisch zubereitete Mahlzeiten. Dadurch ist die Zeit, in der es zu unerwünschten Veränderungen der Inhaltsstoffe der Gewürzdrogen kommen kann, bei Fertiggerichten erhöht. Zudem sind in Fertiggerichten oft eine größere Menge an Zusatzstoffen, wie Konservierungsmittel, Geschmacksverstärker, etc. enthalten, die besonders leicht mit den Inhaltsstoffen der Gewürzdrogen reagieren und so die Bildung unerwünschter Abbau- und Reaktionsprodukte fördern.

Besonders vorteilhafte Ausführungsformen ergeben sich durch die folgenden Merkmale:
Die Zubereitung eines Gerichts in dem Behältnis ist besonders einfach, wenn das Lagerkompartiment mit der zumindest einen Droge in einem Pad oder Topfeinsatz angeordnet ist, wobei die Schicht eine Außenfläche des Pads oder Topfeinsatzes ausbildet und insbesondere derart angeordnet ist, dass eine Atmosphärenverbindung zwischen dem Lagerkompartiment und dem Aufnahmebereich ermöglicht ist, wobei auf der der Schicht gegenüberliegenden Seite des Pads oder des Topfeinsatzes ein Deckel oder eine Auflagefläche für einen Deckel vorgesehen ist, und wobei die Schicht zur Auflage für die Droge ausbildet ist.

Der Topfeinsatz ist insbesondere als wiederverwertbares Zubehör für ein Kochbehältnis ausgebildet. Kochbehältnisse sind hinreichend bekannt und können in unterschiedlichen Typen verwendet werden, wie beispielsweise als Töpfe, Pfannen, Kasserolen etc. Ein erfindungsgemäßer Topfeinsatz kann entweder für einen bestimmten Typ ausgelegt sein, oder an verschiedene Typen, oder Größen anpassbar sein. Dazu kann beispielsweise die Halterung an das jeweilige Kochgefäß angepasst werden, während dieselbe permeable Schicht in verschiedenen Kochgefäßen verwendet werden kann.

Das Pad wird in weiterer Folge näher beschrieben. Unter einem Pad wird in diesem Zusammenhang ein flaches kissen- oder mattenförmiges Pölsterchen verstanden, das eine Länge bzw. einen Durchmesser von 2 - 25 cm, insbesondere 2 - 10 cm, aufweist und eine Höhe von bis zu 3 cm. Das Pad kann beispielsweise zur einmaligen Verwendung ausgebildet sein, und bereits alle Gewürzdrogen für ein bestimmtes Gericht enthalten.

Erfindungsgemäß wird auch ein Deckel zur Verwendung in einem zuvor beschriebenen Verfahren, insbesondere für ein zuvor beschriebenes Behältnis, bereitgestellt, wobei der Deckel derart ausgebildet ist, dass unterhalb der in Benutzung dem Innenraum des Behältnisses zugewandten Unterseite des Deckels die für Luft, Wasser und Wasserdampf permeable Schicht, insbesondere durch Halteelemente reversibel abnehmbar, angeordnet ist, und wobei das Lagerkompartiment zwischen der Unterseite des Deckels und der Schicht angeordnet ist. Der Deckel kann auch mit einem bekannten Topf zur Durchführung des zuvor beschriebenen Verfahrens verwendet werden und ermöglicht eine besonders einfache Umsetzung des Verfahrens, da die Gewürzdroge zusammen mit dem Deckel abgehoben werden kann und auf diese Weise einfach entnommen werden kann. Wenn die Schicht abnehmbar ist, ist eine besonders einfache Reinigung des Deckels möglich.

Vorzugsweise ist vorgesehen, dass an der Unterseite des Deckels Abtropfelemente vorgesehen sind, wobei die permeable Schicht unterhalb der Abtropfelemente angeordnet ist. Die im Folgenden für Pads und Topfeinsätze beschriebene Ausgestaltung der Abtropfelemente kann auch bei dem hier beschriebenen Deckel vorgesehen sein.

Es kann weiters vorgesehen sein, dass der Deckel an seiner Oberseite einen Griff aufweist, und dass die Unterseite des Deckels an der der Oberseite und dem Griff gegenüberliegenden Seite des Deckels ausgebildet ist.

Der Deckel kann vorzugsweise aus einem Kunststoff, einem Edelstahl, Glas oder Holz ausgebildet sein. Während Kunststoff, Edelstahl und Glas weitgehend geschmacksneutral sind, kann Holz zu einer zusätzlichen Würzung beitragen. Die Schicht kann vorzugsweise durch eine perforierte Fläche, ein Gitter oder ein Netz, beispielsweise aus Organza, Edelstahl oder Gold, ausgebildet sein.

Um die Inhaltsstoffe der Gewürzdrogen noch besser extrahieren zu können, kann vorgesehen sein, dass zusätzlich Flüssigkeit von oben über die Gewürzdrogen geleitet werden kann, wobei insbesondere Wasser, Brühe und/oder fette Öle verwendet werden können. Dazu kann vorgesehen sein, dass im Deckel, insbesondere zwischen der Oberseite und der Unterseite des Deckels, ein weiterer Aufnahmebereich angeordnet ist, der an der Oberseite eine reversibel verschließbare Einfüllöffnung aufweist, durch die die Flüssigkeit in den weiteren Aufnahmebereich eingebracht werden kann. An der Unterseite des Deckels, insbesondere an den Abtropfelementen, können Auslassöffnungen vorgesehen sein. Durch die unterseitigen Auslassöffnungen kann die Flüssigkeit über die Gewürzdroge geleitet werden.

Erfindungsgemäß ist weiters ein Pad oder Topfeinsatz, insbesondere zur Verwendung in einem zuvor beschriebenen Verfahren, insbesondere für ein zuvor beschriebenes Behältnis, wobei das Pad oder der Topfeinsatz einen, insbesondere für Luft, Wasser und Wasserdampf undurchlässigen, Deckel aufweist, und eine dem Deckel gegenüberliegend angeordnete für Luft, und insbesondere für Wasser und Wasserdampf, permeable Schicht aufweist, wobei das Lagerkompartiment im Pad oder Topfeinsatz zwischen Deckel und Schicht angeordnet ist. Das Pad bzw. der Topfeinsatz sind besonders flexibel einsetzbar und ermöglichen eine besonders einfache Durchführung des Verfahrens.

Für Fertiggerichte ist ein Pad zur einmaligen Verwendung besonders vorteilhaft, insbesondere wenn der Deckel aus Kunststoff oder Holz und die permeable Schicht aus Organza ausgebildet ist, da dies ein Erwärmen in einer Mikrowelle ermöglicht.

Die Inhaltsstoffe können aus der Droge besonders gut auf die Zubereitung übertragen werden, wenn der Deckel an der der permeablen Schicht gegenüberliegenden Unterseite zumindest ein Abtropfelement aufweist, das derart ausgebildet ist, dass kondensierter Wasserdampf von der Unterseite des Deckels oberhalb der permeablen Schicht abtropft. Insbesondere kann vorgesehen sein, dass das zumindest eine Abtropfelement durch einen, vorzugsweise parallel zum Deckelrand nach innen versetzten, Steg ausgebildet ist, und/oder wobei mehrere Abtropfelemente vorgesehen sind, insbesondere mehrere konzentrisch angeordnete Stege. An der Deckelunterseite kondensierter Wasserdampf, und gegebenenfalls auch Fette, aus der Zubereitung sammeln sich an den Abtropfelementen und tropfen von dort über der Gewürzdroge ab, und werden dadurch mit der Droge in Kontakt gebracht, bevor sie zurück in die Zubereitung gelangen und dadurch zur Würzung der Zubereitung beitragen.

Der Deckel kann vorzugsweise aus einem Kunststoff, einem Edelstahl, Glas oder Holz ausgebildet sein. Während Kunststoff, Edelstahl und Glas weitgehend geschmacksneutral sind, kann Holz zu einer zusätzlichen Würzung beitragen.

Für ein Pad ist es besonders vorteilhaft, wenn im Lagerkompartiment zumindest eine Droge angeordnet ist und das Lagerkompartiment durch eine, insbesondere für flüchtige niedermolekulare organische Verbindungen undurchlässig, entfernbare Folie vom Aufnahmebereich getrennt ist, wobei durch Entfernen der Folie der Aufnahmebereich mit dem Lagerkompartiment in Atmosphärenverbindung bringbar ist. Die Droge im Pad bleibt daher besonders frisch und kann kurz vor Durchführung des Verfahrens mit der Zubereitung in Atmosphärenverbindung gebracht werden, so dass eine Veränderung der Inhaltsstoffe der Droge während der Lagerung vermieden wird.

Zum selben Zweck kann ein Pad, in dessen Lagerkompartiment bereits zumindest eine Droge angeordnet ist, einen, insbesondere für flüchtige niedermolekulare organische Verbindungen undurchlässigen, Flügel aufweisen, der derart angeordnet ist, dass er vor Benutzung das Pad umschließt und bei Benutzung aufklappbar oder auffaltbar ist. Vorzugsweise kann vorgesehen sein, dass zumindest zwei Flügel vorgesehen sind, die in aufgeklapptem bzw. entfaltetem Zustand zur Befestigung des Pads an einem Topf oder Topfdeckel ausgebildet sind.

Ein derartiges Pad ermöglicht eine einfache Durchführung eines erfindungsgemäßen Verfahrens in einem bekannten Kochbehältnis.

Die Erfindung betrifft weiters ein Kosmetikbehältnis und ein Verfahren zur Lagerung einer flüssigen oder halbfesten Zubereitung.

Flüssige und halbfeste Zubereitungen zum Auftragen auf die Haut umfassen regelmäßig Duftstoffe, wobei in hochwertigen Zubereitungen zumeist Auszüge aus natürlichen Drogen enthalten sind. Die Zusammensetzung solcher Auszüge unterscheidet sich von der Zusammensetzung der Inhaltsstoffe in der Droge. Da nicht bei allen Drogen bekannt ist, welche Inhaltsstoffe zur Wirkung beitragen, kann bei der Extraktion ein ungewollter Qualitätsverlust eintreten.

Auch durch den Kontakt mit den anderen Bestandteilen der Zubereitung, wie beispielsweise mit Gelbildnern oder Konservierungsstoffen, kommt es zu Veränderungen der Zusammensetzung der Inhaltsstoffe der Drogen. Vor allem bei längeren Lagerungszeiten, bzw. längerer Shelf-time, kommt es daher zu einem großen Qualitätsverlust. Dieser Qualitätsverlust ist für den Anwender teilweise sofort wahrnehmbar, wenn die Veränderung der Inhaltsstoffe einen veränderten Geruch verursacht. Es ist bekannt, dass durch Duftstoffe das limbische System stimuliert wird. Die Wahrnehmung des Geruchs beim Auftragen leistet daher einen wesentlichen Beitrag zur Zufriedenheit des Anwenders mit der Zubereitung und zur Wirkung einer Zubereitung.

Aus dem Stand der Technik ist es daher beispielsweise bekannt, dass ein Drogenauszug erst bei der Anwendung mit der Zubereitung vermengt wird. Das Vermengen der verschiedenen Bestandteile ist für den Anwender bzw. die Anwenderin ein zusätzlicher Aufwand.

Es sind weiters Kosmetikbehältnisse bekannt, die zwei unterschiedliche von einander getrennte Lagerungsräume für die Zubereitung und den Drogenauszug aufweisen, wobei es bei Anwendung des Kosmetikums zu einer automatischen Vermischung der in den Lagerräumen gelagerten Flüssigkeiten bzw. flüssigen oder halbfesten Zubereitungen kommt. Dadurch kann vermieden werden, dass eine Veränderung der Inhaltsstoffe des Drogenauszugs durch Bestandteile der halbfesten Zubereitung, z.B. Konservierungsmittel, eintritt, es ist jedoch notwendig, den Drogenauszug selbst haltbar zu machen. Weiters kommt es bereits bei der Extraktion zu einem Qualitätsverlust.

Aufgabe der Erfindung ist es daher die Inhaltsstoffe einer Droge in hoher Qualität zur Anwendung auf der Haut bereitzustellen, wobei insbesondere keine Geruchsveränderung der Inhaltsstoffe der Droge stattfinden sollte, und wobei vorzugsweise eine einfache Anwendung der Zubereitung ermöglicht wird.

Erfindungsgemäß ist vorgesehen, dass im Inneren des Kosmetikbehältnisses ein vom Aufnahmebereich getrenntes Lagerkompartiment vorgesehen ist, wobei im Lagerkompartiment zumindest eine, insbesondere pflanzliche, Droge angeordnet ist, und wobei der Aufnahmebereich mit dem Lagerkompartiment in Atmosphärenverbindung steht oder in Atmosphärenverbindung bringbar ist.

Die Inhaltsstoffe der Droge stehen damit unverändert zur Verfügung und können ihre Wirkung voll entfalten. Drogen sind durch Trocknung haltbar gemachte natürliche Substrate, wie Teile von Pflanzen, Harze, o.ä. Während der Lagerung bzw. shelf time kann der Aufnahmebereich vom Lagerkompartiment getrennt sein, so dass die Inhaltsstoffe der Droge unverändert erhalten bleiben. Als Aufnahmeraum wird ein Hohlraum, oder ein einen Hohlraum umfassender Bereich verstanden, der zur Aufnahme einer Flüssigkeit, einer flüssigen oder halbfesten Zubereitung vorgesehen ist. Das Lagerkompartiment ist ein Hohlraum, in dem die Droge angeordnet ist. Vor der erstmaligen Anwendung können der Aufnahmebereich und das Lagerkompartiment in Atmosphärenverbindung gebracht werden. Wenn der Aufnahmebereich und das Lagerkompartiment in Atmosphärenverbindung stehen, ist entweder ein direkter Kontakt von Lagerkompartiment und Aufnahmebereich hergestellt, oder es ist ein Gasraum vorgesehen, der sowohl mit dem Aufnahmebereich, als auch mit dem Lagerkompartiment in Verbindung steht bzw. das Lagerkompartiment umfasst. Kosmetikbehältnisse, die Zubereitungen in einer Menge enthalten, die zur mehrmaligen Anwendung geeignet ist, können üblicherweise reversibel verschlossen werden, beispielsweise mit einem Deckel.

Kosmetikbehältnisse zur einmaligen Anwendung können in einer Verpackung gelagert sein, die das Kosmetikbehältnis von der Umgebung trennt. In verschlossenem oder verpacktem Zustand des Kosmetikbehältnisses bildet sich dabei eine gegenüber der Umwelt abgetrennte Atmosphäre aus und der Aufnahmeraum und das Lagerkompartiment stehen in Atmosphärenverbindung.

Die Atmosphärenverbindung zwischen Aufnahmeraum und Lagerkompartiment ist daher ein den Aufnahmeraum und das Lagerkompartiment umfassender, gegenüber der Umgebung abgegrenzter Bereich, der eine von der Umgebung unterschiedliche Atmosphäre aufweist, wobei die Unterschiede insbesondere in der Konzentration der Inhaltsstoffe der Droge liegen. Die flüssige oder halbfeste Zubereitung nimmt die von der Droge in diese Atmosphäre bzw. diesen Gasraum abgegebenen Inhaltsstoffe auf. Damit stehen die Inhaltsstoffe bei der Anwendung auf der Haut zur Verfügung. Eine Veränderung der Zusammensetzung der Inhaltsstoffe findet nicht statt.

Vorteilhafte Ausgestaltungen ergeben sich durch die folgenden Merkmale:
Die Herstellung und Anwendung der Zubereitung kann vereinfacht werden, wenn der den Aufnahmebereich bildende, insbesondere untere, Bereich des Kosmetikbehältnisses als Tiegel ausgebildet ist. Die Entnahme der Zubereitung kann vereinfacht werden, wenn der Aufnahmebereich flach ausgebildet ist und eine große Oberfläche als Entnahmeöffnung aufweist. Bei der Anwendung muss dann nicht tief in das Gefäß hineingegriffen werden und die Verkeimung der Zubereitung kann reduziert werden. Die große Oberfläche des Aufnahmebereichs ermöglicht gleichzeitig eine großflächige Aufnahme von Inhaltsstoffen der Droge aus der im Innenraum des Behältnisses gebildeten Atmosphäre in die Zubereitung.

Eine in der Herstellung und Anwendung einfache Möglichkeit zur Trennung von Aufnahmebereich und Lagerkompartiment kann vorsehen, dass das Lagerkompartiment durch eine entfernbare Folie vom Aufnahmebereich getrennt ist, wobei durch Entfernen der Folie der Aufnahmebereich mit dem Lagerkompartiment in Atmosphärenverbindung bringbar ist.

Um eine Aufnahme von Inhaltsstoffen, wie z.B. Duftstoffen, in die Zubereitung während der Lagerung zu vermeiden, und um somit einer Veränderung der Inhaltsstoffe vorzubeugen, kann vorgesehen sein, dass die Folie undurchlässig für flüchtige niedermolekulare organische Verbindungen ist. Wenn die Folie vor der Anwendung entfernt wird, beginnt die Beduftung der Zubereitung in voller Stärke und Qualität.

Eine besonders einfache Trennung von Aufnahmebereich und Lagerkompartiment kann vorgesehen sein, wenn das Kosmetikbehältnis einen den Aufnahmebereich reversibel verschließbaren Deckel umfasst und das Lagerkompartiment im Bereich des Deckels angeordnet ist. Es kann dabei vorgesehen sein, dass der Aufnahmebereich mit der entfernbaren Folie verschlossen ist und/oder dass der Deckel auf der dem Aufnahmebereich zugewandten Seite mit der entfernbaren Folie verschlossen ist.

Die Inhaltsstoffe der Zubereitung können besonders gut auf die Haut übertragen werden, wenn ein Applikator zum Auftragen der Zubereitung auf die Haut vorgesehen ist, wobei das Lagerkompartiment im Applikator-Inneren angeordnet ist, und wobei der Applikator zumindest in einem Auftragungsbereich derart ausgebildet ist, dass eine Atmosphärenverbindung zwischen dem Lagerkompartiment und dem Aufnahmebereich ermöglicht ist. Dabei kann insbesondere vorgesehen sein, dass das Lagerkompartiment vom Auftragungsbereich begrenzt wird.

Um eine besonders einfache Aufbewahrung des Applikators im Kosmetikbehältnis zu ermöglichen, kann vorgesehen sein, dass im Bereich der Entnahmeöffnung ein reversibel entfernbares, insbesondere aufklappbares, Gitter vorgesehen ist, auf dem der Applikator anordenbar ist. Alternativ kann vorgesehen sein, dass im Deckel ein Fach ausgebildet ist, wobei das Fach an der dem Inneren des Kosmetikbehältnisses zugewandten Seite ein Gitter aufweist, auf dem der Applikator anordenbar ist, und wobei insbesondere vorgesehen ist, dass die Oberseite des Fachs von einer reversibel verschließbaren, insbesondere aufklappbaren, Abdeckung gebildet ist. Dadurch kann weiters vermieden werden, dass bei der Anwendung in die Zubereitung gegriffen werden muss, sodass die Verkeimung der Zubereitung minimiert wird.

Um ein Verstopfen der Atmosphärenverbindungen zu vermeiden, kann vorgesehen sein, dass der Auftragungsbereich aus Organza gebildet ist, wobei vorzugsweise vorgesehen ist, dass das Lagerkompartiment vom Auftragungsbereich begrenzt wird. Organza quillt bei Kontakt mit Feuchtigkeit nicht, sodass ein dauerhafter Austausch zwischen Lagerkompartiment und Aufnahmebereich ermöglicht ist. In diesem Fall kann der Applikator auch in die Zubereitung eingelegt werden, ohne dass es zu einem Verstopfen der Atmosphärenverbindungen kommt. Es wird dadurch die Aufnahme der Inhaltsstoffe aus der Droge in die Zubereitung verbessert.

Eine besonders einfache Auftragung der Zubereitung wird ermöglicht, wenn der Applikator als Pad ausgebildet ist, wobei der die Atmosphärenverbindung ermöglichende Auftragungsbereich eine Auftragungsseite des Pads bildet, wobei insbesondere vorgesehen ist, dass eine dem Auftragungsbereich gegenüberliegende Halteseite vorgesehen ist, wobei an der Halteseite vorzugsweise ein Griff angeordnet ist. Die Auftragungsseite erlaubt ein flächiges Auftragen der Zubereitung auf die Haut, die als besonders angenehm empfunden wird. Unter Pad wird ein flaches kissen- oder mattenförmiges Pölsterchen verstanden, das üblicherweise eine Länge bzw. einen Durchmesser von 2 - 10 cm oder mehr aufweist und eine Höhe von bis zu 3 cm.

Bei manchen Drogen kann die Abgabe der Inhaltsstoffe in die Atmosphäre bzw. in die Zubereitung verbessert werden, wenn eine Vorbehandlung mit einer bestimmten Flüssigkeit oder einer flüssigen oder halbfesten Zubereitung vorgenommen wird. Beispielsweise kann die Abgabe der Inhaltsstoffe aus Cortex cinnamomi verbesserte werden, wenn die Droge mit Wasser vorgequollen ist.

Diese Vorbefeuchtung kann von außen mit Hilfe einer Injektionsspritze erfolgen. Es kann auch vorgesehen sein, dass im Applikator-Inneren ein weiterer Aufnahmebereich zur Aufnahme einer Flüssigkeit, oder einer flüssigen oder halbfesten Zubereitung vorgesehen ist, wobei der weitere Aufnahmebereich durch eine permeable Schicht vom Lagerkompartiment getrennt ist.

Der weitere Aufnahmebereich kann beispielsweise als Schwamm ausgebildet sein, wobei dadurch eine besonders sanfte Auftragung möglich wird.

Das Volumen des weiteren Aufnahmebereichs kann so gewählt werden, dass eine geeignete Vorbehandlung stattfindet.

Auch kann vorgesehen sein, dass das Volumen des weiteren Aufnahmebereichs so gewählt ist, dass die enthaltene Flüssigkeit oder Zubereitung durch das Lagerkompartiment zum Auftragungsbereich gelangen kann und beim Auftragen zusammen mit der Zubereitung aus dem Aufnahmeraum auf die Haut aufgebracht wird. Die Menge die aus dem weiteren Aufnahmebereich abgegeben wird, kann dann beispielsweise über den Anpressdruck mit dem der Applikator auf die Haut gedrückt wird reguliert werden. Dadurch kann eine individuelle Zusammensetzung für das jeweils gewünschte Anwendungsgebiet erzielt werden, wobei beispielsweise für empfindliche Hautbereiche, wie Hals und Dekollete, mit geringem Druck aufgetragen wird, als für unempfindliche Bereiche, wie Arme oder Beine.

Um eine besonders flächige Auftragung zu ermöglichen, kann vorgesehen sein, dass der Applikator eine formstabile Verstärkung aufweist.

Wenn ein weiterer Aufnahmebereich im Applikator vorgesehen ist, kann die permeable Schicht als Verstärkung ausgeführt sein. Dadurch kann die durch den Anpressdruck aus dem weiteren Aufnahmebereich abgegebene Menge besonders einfach und genau reguliert werden.

Um ein besonders hochwertiges Produkt bereitstellen zu können, kann vorgesehen sein, dass im Deckel ein Schwamm zur Abgabe einer Flüssigkeit oder einer flüssigen oder halbfesten Zubereitung angeordnet ist, wobei insbesondere vorgesehen ist, dass der Schwamm im Inneren des Kosmetikbehältnisses angeordnet ist oder dass der Deckel auf der Außenseite des Kosmetikbehältnisses ein reversibel verschließbares Fach aufweist, wobei der Schwamm in dem Fach angeordnet ist. Bei der Anwendung kann die Droge zunächst an den Schwamm angepresst werden und durch Aufnahme der Flüssigkeit bzw. der Zubereitung aus dem Schwamm aktiviert werden. Beispielsweise kann die Droge mit einem geeigneten Lösungsmittel, wie beispielsweise Wasser, in Kontakt gebracht werden und vorquellen. Auch ist beispielsweise eine Benetzung mit einem hochwertigen Öl als Extraktionsmittel möglich.

Es kann auch vorgesehen sein, dass das Kosmetikbehältnis als Applikator, insbesondere als Pad, ausgebildet ist, wobei der Applikator einen Auftragungsbereich aufweist, der insbesondere aus Organza besteht, wobei das Lagerkompartiment im Applikator-Inneren direkt an den Auftragungsbereich angrenzend angeordnet ist, wobei auf der dem Auftragungsbereich abgewandten Seite des Lagerkompartiments eine permeable Schicht, insbesondere eine Verstärkung, angeordnet ist, wobei auf der dem Lagerkompartiment gegenüberliegenden Seite der permeablen Schicht der Aufnahmebereich angeordnet ist, wobei der Aufnahmebereich komprimierbar ausgebildet ist, wobei im Aufnahmebereich eine flüssige oder halbfeste Zubereitung angeordnet ist, und wobei die permeable Schicht derart ausgebildet ist, dass sie bei Kompression des Aufnahmebereichs für die flüssige oder halbfeste Zubereitung durchlässig ist. Dabei stehen der Aufnahmebereich und das Lagerkompartiment bereits während der Lagerung in Atmosphärenverbindung. Diese Ausführungsform ist besonders kompakt und platzsparend und eignet sich daher vor allem auch für Reisen. Bei Bedarf kann der Applikator auch zur Auftragung einer weiteren Zubereitung verwendet werden.

Sowohl für einen Applikator in einem Kosmetikbehältnis, als auch für ein Kosmetikbehältnis, das als Applikator ausgebildet ist, kann vorgesehen sein, dass auf einer dem Auftragungsbereich gegenüberliegenden Halteseite, insbesondere an einem Griff, zwei Flügel, insbesondere aus einem für flüchtige niedermolekulare organische Verbindungen undurchlässigen Material, vorgesehen sind, die den Applikator umschließend anordenbar sind, wobei insbesondere vorgesehen ist, dass die Flügel eine entfernbare Verbindung aufweisen. Auf diese Weise kann die im Applikator-Inneren bzw. im Lagerkompartiment gelagerte Droge besonders einfach von der umgebenden Atmosphäre getrennt sein, um ein Austreten der Inhaltsstoffe der Droge zu vermeiden.

Für die Herstellung hochwertiger Kosmetika kann vorgesehen sein, dass als Droge, Lignum aquilariae resinatum und/oder Cortex cinnamomi, enthalten ist. Diese Drogen entfalten eine besonders angenehme Wirkung auf die Haut. Allerdings ist für diese Drogen bislang nicht bekannt, welche Inhaltsstoffe zur Wirkung beitragen, sodass durch die Herstellung eines Extraktes ein Qualitätsverlust auftreten würde, der erfindungsgemäß vermieden werden kann.

Erfindungsgemäß ist weiters ein Verfahren zur Lagerung einer flüssigen oder halbfesten Zubereitung zur Auftragung auf die Haut, wobei die flüssige oder halbfeste Zubereitung zusammen mit einer festen Droge innerhalb eines Behältnisses, insbesondere in einem zuvor beschriebenen Kosmetikbehältnis, gelagert wird, wobei die Droge für die Dauer der Lagerung von der Zubereitung räumlich getrennt wird, und wobei insbesondere vorgesehen ist, dass beim Auftragen die räumliche Trennung zumindest teilweise aufgehoben wird. Dadurch können die Inhaltsstoffe der Droge unverändert wirken und ein Qualitätsverlust kann vermieden werden.

Um eine besonders einfache Anwendung zu ermöglichen kann vorgesehen sein, dass zum Auftragen ein Applikator verwendet wird, wobei die Droge in einem im Applikator-Inneren angeordneten Lagerkompartiment gelagert ist und wobei zumindest in einem Auftragungsbereich des Applikators eine reversible Aufnahme der Zubereitung in das Lagerkompartiment ermöglicht ist.

Dieser Aspekt der Erfindung lässt sich anhand der folgenden Definitionen bzw. durch die folgenden Merkmale beschreiben:
1. Kosmetikbehältnis zur Aufbewahrung einer flüssigen oder halbfesten Zubereitung, wobei das Kosmetikbehältnis einen Aufnahmebereich zur Aufnahme der Zubereitung umfasst, dadurch gekennzeichnet, dass im Inneren des Kosmetikbehältnisses ein vom Aufnahmebereich getrenntes Lagerkompartiment vorgesehen ist, wobei im Lagerkompartiment zumindest eine, insbesondere pflanzliche, Droge angeordnet ist, und wobei der Aufnahmebereich mit dem Lagerkompartiment in Atmosphärenverbindung steht oder in Atmosphärenverbindung bringbar ist.
2. Kosmetikbehältnis nach Punkt 1, dadurch gekennzeichnet, dass das Lagerkompartiment durch eine, insbesondere für flüchtige niedermolekulare organische Verbindungen undurchlässig, entfernbare Folie vom Aufnahmebereich getrennt ist, wobei durch Entfernen der Folie der Aufnahmebereich mit dem Lagerkompartiment in Atmosphärenverbindung bringbar ist, und wobei insbesondere vorgesehen ist, dass das Kosmetikbehältnis einen den Aufnahmebereich reversibel verschließbaren Deckel umfasst und das Lagerkompartiment im Deckel angeordnet ist.
3. Kosmetikbehältnis nach Punkt 1 oder 2, dadurch gekennzeichnet, dass ein Applikator zum Auftragen der Zubereitung auf die Haut vorgesehen ist, wobei das Lagerkompartiment im Applikator-Inneren angeordnet ist, und wobei der Applikator zumindest in einem Auftragungsbereich derart ausgebildet ist, dass eine Atmosphärenverbindung zwischen dem Lagerkompartiment und dem Aufnahmebereich ermöglicht ist, wobei insbesondere vorgesehen ist, dass der Auftragungsbereich aus Organza gebildet ist, und wobei vorzugsweise vorgesehen ist, dass das Lagerkompartiment vom Auftragungsbereich begrenzt wird.
4. Kosmetikbehältnis nach Anspruch einem der Punkte 1 bis 3, dadurch gekennzeichnet, dass der Applikator als Pad ausgebildet ist, wobei der die Atmosphärenverbindung ermöglichende Auftragungsbereich eine Auftragungsseite des Pads bildet, wobei insbesondere vorgesehen ist, dass eine dem Auftragungsbereich gegenüberliegende Halteseite vorgesehen ist, wobei an der Haltseite vorzugsweise ein Griff angeordnet ist.
5. Kosmetikbehältnis nach Punkt 4, dadurch gekennzeichnet, dass im Applikator-Inneren ein weiterer Aufnahmebereich zur Aufnahme einer Flüssigkeit oder einer flüssigen oder halbfesten Zubereitung vorgesehen ist, wobei der weitere Aufnahmebereich durch eine permeable Schicht vom Lagerkompartiment getrennt ist.
6. Kosmetikbehältnis nach einem der Punkte 3 bis 5, dadurch gekennzeichnet, dass der Applikator, insbesondere als permeable Schicht, eine formstabile Verstärkung aufweist.
7. Kosmetikbehältnis nach Punkt 1, dadurch gekennzeichnet, dass das Kosmetikbehältnis als Applikator, insbesondere als Pad, ausgebildet ist, wobei der Applikator einen Auftragungsbereich aufweist, der insbesondere aus Organza besteht, wobei das Lagerkompartiment im Applikator-Inneren direkt an den Auftragungsbereich angrenzend angeordnet ist, wobei auf der dem Auftragungsbereich abgewandten Seite des Lagerkompartiments eine permeable Schicht, insbesondere eine Verstärkung, angeordnet ist, wobei auf der dem Lagerkompartiment gegenüberliegenden Seite der permeablen Schicht der Aufnahmebereich angeordnet ist, wobei der Aufnahmebereich komprimierbar ausgebildet ist, wobei im Aufnahmebereich eine flüssige oder halbfeste Zubereitung angeordnet ist, und wobei die permeable Schicht derart ausgebildet ist, dass sie bei Kompression des Aufnahmebereichs für die flüssige oder halbfeste Zubereitung durchlässig ist.
8. Kosmetikbehältnis nach einem der Punkte 3 bis 7, dadurch gekennzeichnet, dass auf einer dem Auftragungsbereich gegenüberliegenden Halteseite, insbesondere an einem Griff, zwei Flügel, insbesondere aus einem für flüchtige niedermolekulare organische Verbindungen undurchlässigen Material, vorgesehen sind, die den Applikator umschließend anordenbar sind, wobei insbesondere vorgesehen ist, dass die Flügel eine entfernbare Verbindung aufweisen.
9. Kosmetikbehältnis nach einem der Punkte 1 bis 8, dadurch gekennzeichnet, dass als Droge Lignum aquilariae resinatum und/oder Cortex cinnamomi enthalten ist.
10. Verfahren zur Lagerung einer flüssigen oder halbfesten Zubereitung zur Auftragung auf die Haut,
   dadurch gekennzeichnet, dass die flüssige oder halbfeste Zubereitung zusammen mit einer festen Droge innerhalb eines Behältnisses, insbesondere in einem Kosmetikbehältnis nach einem der Punkte 1 bis 9, gelagert wird, wobei die Droge für die Dauer der Lagerung von der Zubereitung räumlich getrennt wird,
   wobei insbesondere vorgesehen ist, dass beim Auftragen die räumliche Trennung zumindest teilweise aufgehoben wird,
   wobei vorzugsweise vorgesehen ist, dass zum Auftragen ein Applikator verwendet wird, wobei die Droge in einem im Applikator-Inneren angeordneten Lagerkompartiment gelagert ist und wobei zumindest in einem Auftragungsbereich des Applikators eine reversible Aufnahme der Zubereitung in das Lagerkompartiment ermöglicht ist.

Besonders vorteilhafte Ausführungsformen der Erfindung sind anhand der folgenden Zeichnungen ohne Einschränkung des allgemeinen erfinderischen Gedankens beispielhaft dargestellt.
Fig. 1 zeigt ein beispielhaftes Kosmetikbehältnis mit einem Applikator.
Fig. 2 zeigt einen beispielhaften alternativen Applikator im Querschnitt.
Fig. 3 zeigt den Applikator aus Fig. 2 in Draufsicht.
Fig. 4 zeigt ein beispielhaftes Behältnis mit einem Topfeinsatz.
Fig. 5 zeigt einen beispielhaften Deckel für ein Behältnis.
Fig. 6 zeigt ein beispielhaftes Behältnis mit einem Pad.
Fig. 7 zeigt ein beispielhaftes Verfahren in einem Heißluftdämpfer.

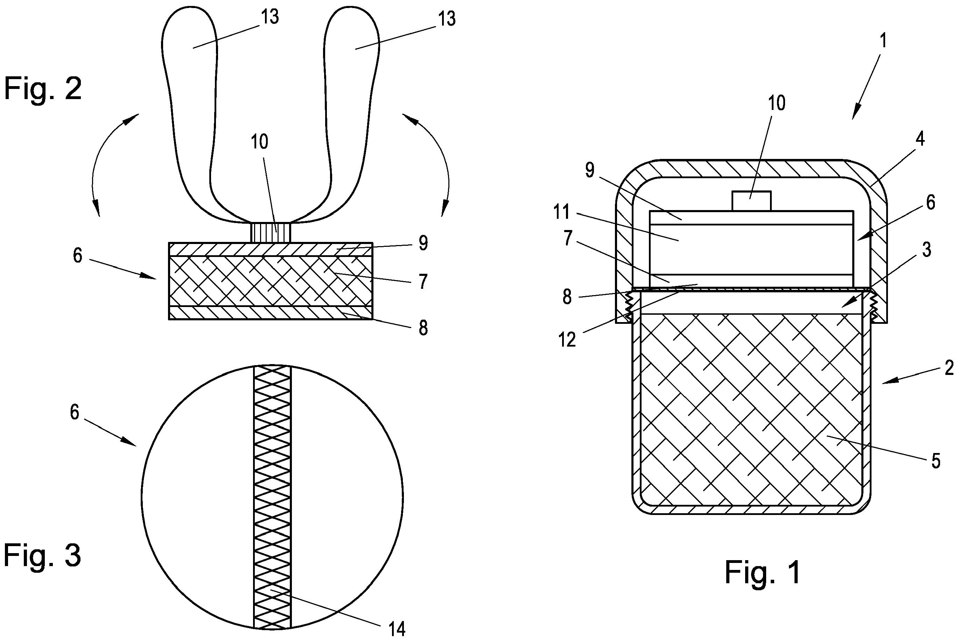

Fig. 1 zeigt ein beispielhaftes Kosmetikbehältnis 1 im Querschnitt. Das Kosmetikbehältnis 1 umfasst einen Tiegel mit einem Aufnahmebereich 2, der über einen Schraubverschluss mit einem Deckel 4 verschlossen ist. Im Aufnahmebereich 2 ist eine halbfeste Zubereitung 5 angeordnet. Der Tiegel weist eine Entnahmeöffnung zur Entnahme der Zubereitung 5 aus dem Aufnahmebereich 2 auf. Die Entnahmeöffnung ist mit einer entfernbaren Folie 4 verschlossen. Die Folie 4 ist undurchlässig für flüchtige niedermolekulare organische Verbindungen. Im Deckel 3 ist ein Applikator 6 angeordnet. Im Inneren des Applikators 6 ist ein Lagerkompartiment 7 mit einer pflanzlichen Droge angeordnet, im vorliegenden Beispiel handelt es sich dabei um Cortex cinnamomi bzw. Zimt.

Der in Fig. 1 dargestellte Applikator 6 ist als Pad ausgeführt. Das Pad weist an einer Auftragungsseite einen Auftragungsbereich 8 aus Organza auf. Beim Auftragen auf die Haut kann durch unterschiedliche Druckausübung ein sanftes Einreiben oder ein leichter Peeling-Effekt erzeugt werden. Der Organza ermöglicht eine Atmosphärenverbindung zwischen dem Lagerkompartiment und der umgebenden Atmosphäre. Direkt oberhalb des Organzas ist das Lagerkompartiment 7 angeordnet. An der dem Auftragungsbereich 8 gegenüberliegende Halteseite ist ein Griff 10 angeordnet. An der Halteseite ist im Applikator-Inneren ein weiterer Aufnahmebereich 11 ausgebildet. Vor der ersten Verwendung des Applikators 6 ist es besonders günstig, wenn die Zimtrinde für ca. 10 Minuten in Wasser zum Quellen gebracht wird. In der dargestellten Ausführungsform ist daher im weiteren Aufnahmebereich 11 die zum Vorquellen der im Lagerkompartiment 7 gelagerten Droge notwendige Menge Wasser enthalten.

Der weitere Aufnahmebereich 11 ist vom Lagerkompartiment 7 durch eine permeable Schicht 9 getrennt, die als Verstärkung ausgebildet ist. Durch Druck wird die permeable Schicht 9 durchlässig für die im weiteren Aufnahmebereich 11 gelagerte Flüssigkeit, sodass vor der ersten Anwendung das Wasser aus dem weiteren Aufnahmebereich 11 in das Lagerkompartiment 7 gedrückt werden kann.

Fig. 2 zeigt eine alternative Ausführungsform eines Applikators 6. Der Applikator 6 ist ebenfalls als Pad ausgebildet. Der die Atmosphärenverbindung ermöglichende Auftragungsbereich 8 bildet die Auftragungsseite des Pads. Der Auftragungsbereich 8 ist aus Organza gebildet. Weiters ist eine dem Auftragungsbereich 8 gegenüberliegende formstabile Halteseite mit Griff 10 vorgesehen. Zwischen Auftragungsbereich 8 und Halteseite ist das Lagerkompartiment 7 angeordnet. In der dargestellten Ausführungsform ist im Lagerkompartiment 7 als Droge Lignum aquilariae resinatum bzw. Oudh-Holz, angeordnet. An der Halteseite bzw. am Griff 10 sind zwei seitliche Flügel 12 angeordnet. Bei der Lagerung können die Flügel 12 um den Applikator 6 gelegt oder gefaltet werden, sodass die Auftragungsseite 8 abgedeckt ist. Zur Auftragung werden die Flügel 12 entsprechend nach oben abgehoben, sodass die Auftragungsseite 8 freigelegt wird.

Fig. 3 zeigt den Applikator 6 aus Fig. 2 im Lagerzustand vor der ersten Verwendung von der Unterseite. Die beiden Flügel 12 sind um den Applikator 6 gelegt und über der Auftragungsseite überlappend angeordnet. In der dargestellten Ausführungsform ist im überlappenden Bereich eine Verklebung 13 vorgesehen. Die Laschen sind aus einer für flüchtige niedermolekulare organische Verbindungen undurchlässigen Folie 4 gebildet, sodass durch die Flügel 12 das Lagerkompartiment 7 vom Aufnahmebereich 2 getrennt ist. Vor der ersten Verwendung des Applikators 6 wird die Verklebung 13 gelöst und die Flügel 12 werden nach oben abgehoben. Der in Fig. 2 und 3 dargestellte Applikator 6 kann beispielsweise in dem in Fig. 1 dargestellten Kosmetikbehältnis 1 statt des in Fig. 1 dargestellten Applikators 6 angeordnet werden.

Für die Lagerung der flüssigen oder halbfesten Zubereitung 5 innerhalb des Kosmetikbehältnisses 1 zusammen mit einer festen Droge kann daher für die Dauer der Lagerung eine räumliche Trennung von Zubereitung 5 und Droge hergestellt werden. Beim Auftragen wird der Applikator 6 in die Zubereitung 5 eingetaucht und damit die Zubereitung 5 aus dem Kosmetikbehältnis 1 entnommen. Dabei wird die räumliche Trennung von Lagerkompartiment 7 und Aufnahmebereich 2 teilweise aufgehoben. Die Zubereitung 5 dringt teilweise in den Applikator 6 ein, wobei die Zubereitung 5 insbesondere auch teilweise in einen Teil des Lagerkompartiments 7 aufgenommen wird. Beim Auftragen auf die Haut wird die Zubereitung 5 vom Applikator 6 bzw. auch aus dem Lagerkompartiment 7 auf die Haut abgegeben. Dabei werden die Inhaltsstoffe der Droge ebenfalls an die Haut abgegeben.

Das Kosmetikbehältnis 1 bzw. das Verfahren zur Lagerung der Zubereitung ermöglicht somit eine einfache Anwendung einer qualitativ besonders hochwertigen Zubereitung.

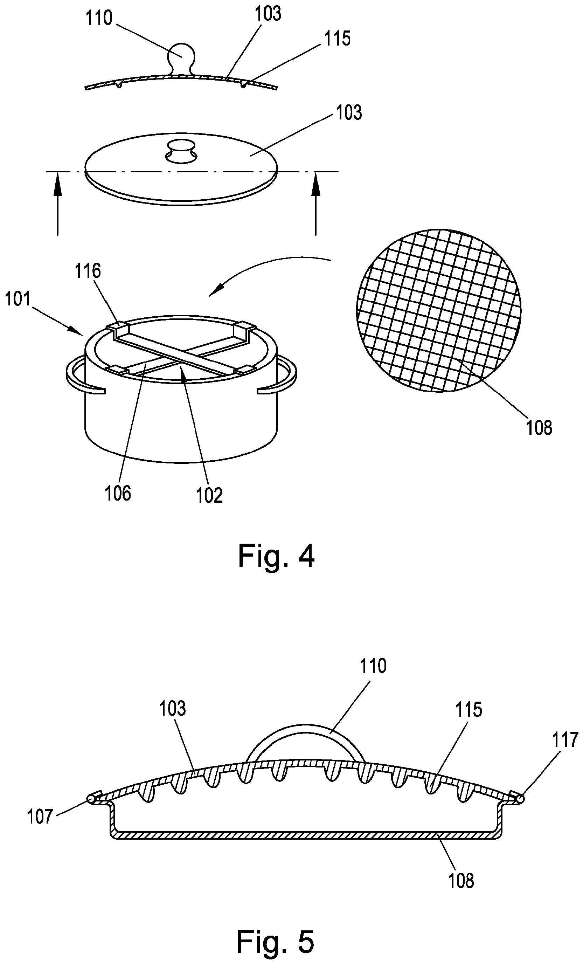

Fig. 4 zeigt ein beispielhaftes Behältnis 101 mit einem Topfeinsatz 106. Das Kochbehältnis 101 ist in der dargestellten Ausführungsform ein Topf. Im Inneren des Topfes ist der Aufnahmebereich 102 ausgebildet. Oberhalb des Aufnahmebereichs 102 ist ein Topfeinsatz 106 angeordnet, der zwei überkreuzte Edelstahlbänder, die in dieser Ausführungsform aus Edelstahl bestehen, mit Halterungen zur Befestigung am Topfrand aufweist. Die Halterungen dienen gleichzeitig als Auflagefläche 116 für die Auflage eines Deckels 103. Auf den zwei Bändern wird eine permeable Schicht 108 angeordnet. In der dargestellten Ausführungsform ist die permeable Schicht 108 als Gitter aus Edelstahl ausgebildet. Oberhalb der permeablen Schicht 108 kann der Deckel 103 reversibel abnehmbar angeordnet werden. Das Lagerkompartiment 107 ist dann von der permeablen Schicht 108 und dem Deckel 103 begrenzt.

An der Unterseite des Deckels 103 sind Abtropfelemente 115 angeordnet, die bei Verwendung des Behältnisses 101 zum Kochen kondensierenden Wasserdampf bzw. Wasser sammeln und oberhalb der permeablen Schicht 108 abtropfen lassen. Die Abtropfelemente 115 werden in der dargestellten Ausführungsform durch einen Steg gebildet.

In einer nicht dargestellten Ausführungsform kann vorgesehen sein, dass im Deckel 103 ein weiterer Aufnahmebereich angeordnet ist, der an der Oberseite eine reversibel verschließbare Einfüllöffnung aufweist, durch die zusätzliche Flüssigkeit in den weiteren Aufnahmebereich eingebracht werden kann. An der Unterseite des Deckels 103, insbesondere an den Abtropfelementen 115 können Öffnungen vorgesehen sein. Durch die unterseitigen Öffnungen kann die zusätzliche Flüssigkeit über die Gewürzdroge geleitet werden.

Durch die permeable Schicht 108 kann ein Gasaustausch zwischen Lagerkompartiment 107 und Aufnahmebereich 102 erfolgen, sodass ein gemeinsamer Gasraum bzw. eine von der Umgebung unterschiedliche Innenatmosphäre im Kochbehältnis 101 ausgebildet ist.

Für die Zubereitung eines Gerichts werden die Zutaten der Zubereitung, wie beispielsweise Gemüse oder Fleisch, in den Aufnahmebereich 102 gegeben. Die Gewürzdrogen werden von den Zutaten getrennt im Topfeinsatz 106 angeordnet. Danach wird der Deckel 103 geschlossen und der Inhalt erhitzt. Der entstehende Wasserdampf kondensiert an der Unterseite des Deckels 103 und tropft, vor allem über die Abtropfelemente 115, zurück auf die Gewürzdrogen und von dort in den Aufnahmebereich 102. Dadurch werden zusätzlich zur Übertragung durch den Gasraum Inhaltsstoffe der Drogen an das Gericht weitergegeben.

Fig. 5 zeigt einen beispielhaften Deckel 103 für ein Kochbehältnis 101. Der gezeigte Deckel 103 kann mit verschiedenen bekannten Kochgefäßen 101, die einen Aufnahmebereich 102 aufweisen, zur Durchführung eines zuvor beschriebenen Verfahrens verwendet werden. Dazu weist der Deckel 103 an seiner Unterseite eine Vielzahl von Abtropfelementen 115 auf. In der dargestellten Ausführungsform werden die Abtropfelemente 115 durch parallel zum Deckelrand verlaufende konzentrisch angeordnete Stege ausgebildet. Dadurch wird einerseits eine gleichmäßige Verteilung des abtropfenden Wassers oberhalb der permeablen Schicht 108 ermöglicht, während gleichzeitig eine gründliche einfache Reinigung der Deckelunterseite möglich ist.

Unterhalb der Abtropfelemente 115 ist die permeable Schicht 108 ausgebildet. Damit ist das Lagerkompartiment 107 von der permeablen Schicht 108 und der Unterseite des Deckels 103 begrenzt und räumlich getrennt vom Aufnahmebereich 102. Die Schicht 108 ist reversibel abnehmbar durch die Halteelemente 117 am Deckelrand befestigt. Dadurch kann die Gewürzdroge bzw. die Gewürzdrogen einfach in das Lagerkompartiment 107 eingebracht werden und aus dem Lagerkompartiment 107 entfernt werden. Auch eine Reinigung der Einzelteile wird durch die reversible Befestigung erleichtert.

An der Oberseite weist der Deckel 103 einen Griff 110 auf. Mit Hilfe des Griffs 110 kann der Deckel 103 vom Kochbehältnis 101 abgehoben werden und der Aufnahmebereich 102 wird zugänglich, sodass die Zutaten beispielsweise umgerührt werden können. Zur effizienten Übertragung der Inhaltsstoffe der Droge bzw. der Drogen in die Zubereitung sollte der Deckel 103 jedoch nur selten und möglichst kurz geöffnet werden um die Innenatmosphäre zu erhalten. Es ist daher in dieser Ausführungsform besonders vorteilhaft, wenn der Deckel 103 aus Glas ist, da dadurch der Kochvorgang von außen verfolgt werden kann.

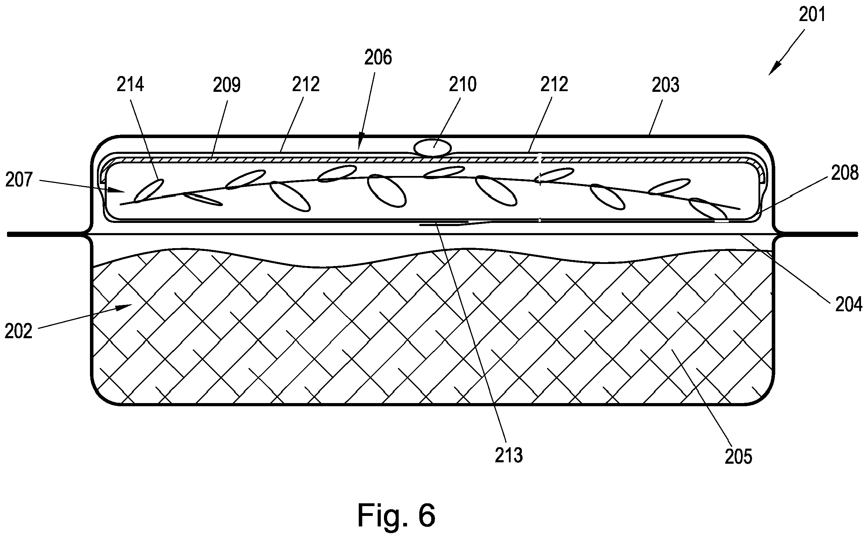

Fig. 6 zeigt ein beispielhaftes Behältnis 201 mit einem Pad 206. Das Behältnis 201 ist als mikrowellengeeignetes Behältnis 201 ausgebildet. Im unteren Bereich ist eine Schale als Aufnahmebereich 202 ausgebildet. Darin ist das zu würzende Fertiggericht 205 angeordnet. Die Schale ist von einer Folie 204 verschlossen. Oberhalb der Schale ist ein Deckel 203 angeordnet. Die Schale und der Deckel 203 sind in der dargestellten Ausführungsform miteinander verbunden, insbesondere verschweißt. Im Bereich des Deckels 203 ist ein Pad 206 angeordnet. Im Pad 206 ist das Lagerkompartiment 207 ausgebildet, wobei im Lagerkompartiment 207 bereits die Gewürzdroge 214 bzw. die Gewürzdrogen angeordnet sind. An der Oberseite weist das Pad 206 eine Verstärkung 209 auf, die das Lagerkompartiment 207 an seiner Oberseite begrenzt. An der der Verstärkung 209 gegenüberliegenden Unterseite weist das Lagerkompartiment 207 eine permeable Schicht 208 auf. Um die hohe Qualität der Droge 214 zu erhalten, weist das Pad 206 zwei Flügel 212 auf, die das Pad 206 umschließend angeordnet sind. An der Unterseite des Pads 206 sind die Flügel 212 verbunden, so dass innerhalb der Flügel 212 eine abgeschlossene Atmosphäre bzw. ein abgeschlossener Gasraum ausgebildet ist, so dass das Aroma der Gewürze 214 erhalten bleibt. Um die Flügel 212 einfach öffnen zu können, sind sie in der dargestellten Ausführungsform in einem Teil eines Überlappungsbereichs durch eine Verklebung 213 verbunden.

Zur Durchführung des Verfahrens wird zunächst der Deckel 203 von der Schale abgenommen. Anschließend wird die Folie 204 abgezogen. Weiters wird die Verklebung 213 der Flügel 212 gelöst und das Pad 206 mit Hilfe der Flügel 212 am Deckel 203 so befestigt, dass zwischen Aufnahmebereich 202 und Lagerkompartiment 207 eine räumliche Trennung gegeben ist, bzw. ein gemeinsamer Gasraum ausgebildet ist, der sowohl vom Aufnahmebereich 202 als auch vom Lagerkompartiment 207 begrenzt wird und der die Atmosphärenverbindung herstellt. Um einen Überdruck während des Erhitzens zu vermeiden, wird der Deckel 203 mit einigen Perforationen versehen, die jedoch die Ausbildung einer Innenatmosphäre im Behältnis nicht beeinträchtigen. Um die Würzung des Gerichts 205 zu verstärken, kann nach dem Erwärmen bzw. vor dem Verzehr das Pad 206 mit Hilfe des Griffs 210 zusätzlich kurz in das Gericht 205 eingetaucht werden.

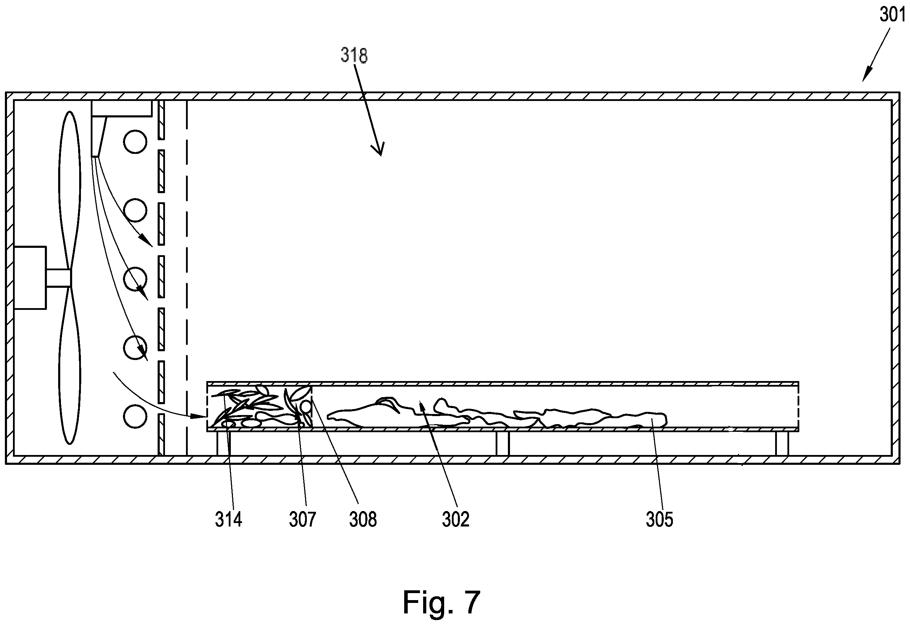

Fig. 7 zeigt die Durchführung eines beispielhaften Verfahrens in einem Heißluftdämpfer 301. Im Garraum 318 des Heißluftdämpfers 301 wird ein Einschub zur Zubereitung eines Gerichtes 305 eingebracht. Im Garraum 318 herrscht eine von der Umgebung abgetrennte Atmosphäre, bzw. weist der Gasraum im Inneren des Garraums 318 Unterschiede zu dem den Heißluftdämpfer 301 umgebenden Gasraum auf. Die Gewürzdrogen 314 sind, insbesondere im Wesentlichen unzerkleinert, in einem Lagerkompartiment 307 angeordnet. Das Lagerkompartiment 307 ist durch eine permeable Schicht 308 aus einem Edelstahlnetz von den in einem Aufnahmebereich 302 angeordneten zuzubereitenden Speisen 305 getrennt. Das Lagerkompartiment 307 und der Aufnahmebereich 305 stehen in einer Atmosphärenverbindung. Bei der Zubereitung der Speisen gelangen Inhaltsstoffe der Gewürzdroge 314 über den Gasraum bzw. die Atmosphärenverbindung in die Speise 305. Wie bei der Zubereitung in einem Heißluftdämpfer 301 üblich, kann dabei bei Bedarf Wasserdampf eingesetzt werden. Dieser wird dann bei der Durchführung des erfindungsgemäßen Verfahrens zunächst über die Gewürzdroge 314 geleitet, sodass die Inhaltsstoffe noch besser übertragen werden können.

Das beschriebene Verfahren, bzw. die gezeigten Kochbehältnisse ermöglichen somit die Bereitstellung eines besonders gut verträglichen und ausgewogen gewürzten Gerichts.

## Patentansprüche

1. Verfahren zur Übertragung von Inhaltsstoffen aus einer, insbesondere pflanzlichen, Droge (214, 314) in eine Zubereitung (5, 205, 305), insbesondere eine Zubereitung zur Einnahme oder Auftragung auf den menschlichen Körper, wobei ein Behältnis (1, 101, 201, 301) mit einer von der Umgebung abtrennbaren Innenatmosphäre bereitgestellt wird, wobei im Inneren des Behältnisses (1, 101, 201, 301) zumindest ein Aufnahmebereich (2, 102, 202, 302) für die Zubereitung (5, 205, 305) bereitgestellt wird,
**dadurch gekennzeichnet, dass** zumindest ein vom Aufnahmebereich (2, 102, 202, 302) getrenntes Lagerkompartiment (7, 107, 207, 307), bereitgestellt wird, wobei das Lagerkompartiment (7, 107, 207, 307) zumindest teilweise von einer für Luft, und insbesondere für Wasser und Wasserdampf, permeablen Schicht (9, 108, 208, 308) begrenzt ist, wobei durch die Schicht (9, 108, 208, 308) eine Atmosphärenverbindung zwischen Aufnahmebereich und Lagerkompartiment (7, 107, 207, 307) ermöglicht ist, und wobei die Droge (214, 314) von der Zubereitung (5, 205, 305) getrennt in dem Lagerkompartiment (7, 107, 207, 307) angeordnet wird.

2. Behältnis für Gerichte, insbesondere Fertiggerichte, insbesondere zur Verwendung in einem Verfahren nach Anspruch 1, wobei das Behältnis (101, 201) einen Aufnahmebereich (102, 202) zur Aufnahme des Gerichts und einen abnehmbaren Deckel (103, 203) umfasst, wobei im Inneren des Behältnisses (101, 201), insbesondere im Bereich des Deckels (103, 203), ein vom Aufnahmebereich (102, 202) getrenntes Lagerkompartiment (107, 207) vorgesehen ist, und im Lagerkompartiment (107, 207) zumindest eine, insbesondere pflanzliche, Droge (214) anordenbar oder angeordnet ist, wobei das Lagerkompartiment (7, 107, 207) zumindest teilweise von einer für Luft, und insbesondere für Wasser und Wasserdampf, permeablen Schicht (9, 108, 208) begrenzt ist, und wobei das Lagerkompartiment (107, 207) durch die Schicht (9, 108, 208) mit dem Aufnahmebereich (102) in Atmosphärenverbindung steht oder zur Ausbildung einer gemeinsamen Innenatmosphäre in Atmosphärenverbindung bringbar ist.

3. Behältnis nach Anspruch 2, wobei das Lagerkompartiment (107, 207) mit der zumindest einen Droge (214) in einem Pad (206) oder Topfeinsatz (106) angeordnet ist, wobei die Schicht (108, 208) eine Außenfläche des Pads (206) oder Topfeinsatzes (106) ausbildet und insbesondere derart angeordnet ist, dass eine Atmosphärenverbindung zwischen dem Lagerkompartiment (107, 207) und dem Aufnahmebereich (102, 202) ermöglicht ist, wobei auf der der Schicht (108, 208) gegenüberliegenden Seite des Pads (206) oder des Topfeinsatzes (106) der Deckel (103, 203) oder eine Auflagefläche (216) für einen Deckel (103, 203) vorgesehen ist, und wobei die Schicht (108, 208) zur Auflage für die Droge (214) ausbildet ist.

4. Deckel zur Verwendung in einem Verfahren nach Anspruch 1, insbesondere für ein Behältnis nach Anspruch 2 oder 3, wobei der Deckel (103) aus einem für Luft undurchlässigen Material ausgebildet ist, wobei unterhalb der Unterseite des Deckels (103) die Schicht (108), insbesondere durch Halteelemente (117) reversibel abnehmbar, angeordnet ist, und wobei das Lagerkompartiment (107) von der Unterseite des Deckels (103) und der Schicht (108) begrenzt ist, wobei vorzugsweise vorgesehen ist, dass an der Unterseite des Deckels (103) Abtropfelemente (115) vorgesehen sind und die Schicht (108) unterhalb der Abtropfelemente (115) angeordnet ist.

5. Pad oder Topfeinsatz, insbesondere zur Verwendung in einem Verfahren nach Anspruch 1, insbesondere für ein Behältnis nach Anspruch 2 oder 3, wobei das Pad (206) oder der Topfeinsatz (106) einen, insbesondere für Luft, Wasser und Wasserdampf undurchlässigen, Deckel (103, 203) aufweist, und eine dem Deckel (103, 203) gegenüberliegend angeordnete, für Luft, und insbesondere für Wasser und Wasserdampf, permeable Schicht (9, 108, 208) aufweist, wobei das Lagerkompartiment (7, 107, 207) im Pad (206) oder Topfeinsatz (106) von dem Deckel (103) und der Schicht (108) begrenzt ist,
wobei insbesondere vorgesehen ist, dass die Schicht (108) durch eine perforierte Fläche, ein Gitter oder ein Netz, vorzugsweise aus Organza, Edelstahl oder Gold, ausgebildet ist und/oder wobei insbesondere vorgesehen ist, dass der Deckel (103, 203) aus einem Kunststoff, einem Edelstahl oder Holz ausgebildet ist.

6. Pad oder Topfeinsatz oder Deckel nach Anspruch 4 oder 5, wobei der Deckel (103, 203) an der der permeablen Schicht (108, 208) gegenüberliegenden Unterseite zumindest ein Abtropfelement (115) aufweist, das insbesondere derart ausgebildet ist, dass in Benutzung kondensierter Wasserdampf von der Unterseite des Deckels (103, 203) oberhalb der permeablen Schicht (108, 208) abtropft,
wobei insbesondere vorgesehen ist, dass das zumindest eine Abtropfelement (115) durch einen, vorzugsweise parallel zum Deckelrand nach innen versetzten, Steg ausgebildet ist, und/oder wobei insbesondere mehrere Abtropfelemente (115) vorgesehen sind, vorzugsweise mehrere konzentrisch angeordnete Stege.

7. Pad nach einem der Ansprüche 5 oder 6, wobei zumindest eine Droge (214) im Lagerkompartiment (107, 207) angeordnet ist und das Lagerkompartiment (107, 207) durch eine, insbesondere für flüchtige niedermolekulare organische Verbindungen undurchlässige, entfernbare Folie (204) vom Aufnahmebereich (205) getrennt ist, wobei durch Entfernen der Folie (204) der Aufnahmebereich mit dem Lagerkompartiment (107, 207) in Atmosphärenverbindung bringbar ist.

8. Pad nach einem der Ansprüche 5 bis 7, wobei im Lagerkompartiment (7, 107, 207) zumindest eine Droge (214) angeordnet ist, wobei das Pad (206) zumindest einen, insbesondere für flüchtige niedermolekulare organische Verbindungen undurchlässigen, Flügel (212) aufweist, der derart angeordnet ist, dass er vor Benutzung das Pad (206), insbesondere vollständig, umschließt und bei Benutzung aufklappbar bzw. auffaltbar ist, wobei vorzugsweise vorgesehen ist, dass zumindest zwei Flügel (212) vorgesehen sind, die in aufgeklapptem bzw. aufgefaltetem Zustand zur Befestigung des Pads (206) an einem Topf oder Topfdeckel ausgebildet sind.

9. Kosmetikbehältnis, insbesondere zur Verwendung in einem Verfahren nach Anspruch 1, zur Aufbewahrung einer flüssigen oder halbfesten Zubereitung, wobei das Kosmetikbehältnis (1) einen Aufnahmebereich (2) zur Aufnahme der Zubereitung (5) umfasst, wobei im Inneren des Kosmetikbehältnisses (1) ein vom Aufnahmebereich (2) getrenntes Lagerkompartiment (7) vorgesehen ist, wobei im Lagerkompartiment (7) zumindest eine, insbesondere pflanzliche, Droge (214) angeordnet ist, und wobei der Aufnahmebereich (2) mit dem Lagerkompartiment (7) in Atmosphärenverbindung steht oder in Atmosphärenverbindung bringbar ist.

10. Kosmetikbehältnis nach Anspruch 9, **dadurch gekennzeichnet, dass** das Lagerkompartiment (7) durch eine, insbesondere für flüchtige niedermolekulare organische Verbindungen undurchlässige, entfernbare Folie (4) vom Aufnahmebereich (2) getrennt ist, wobei durch Entfernen der Folie (4) der Aufnahmebereich (2) mit dem Lagerkompartiment (7) in Atmosphärenverbindung bringbar ist, und wobei insbesondere vorgesehen ist, dass das Kosmetikbehältnis (1) einen den Aufnahmebereich (2) reversibel verschließbaren Deckel (3) umfasst und das Lagerkompartiment (7) im Deckel (3) angeordnet ist.

11. Kosmetikbehältnis nach Anspruch 9 oder 10, **dadurch gekennzeichnet, dass** ein Applikator (6) zum Auftragen der Zubereitung (5) auf die Haut vorgesehen ist, wobei das Lagerkompartiment (7) im Applikator-Inneren angeordnet ist, und wobei der Applikator (6) zumindest in einem Auftragungsbereich (8) derart ausgebildet ist, dass eine Atmosphärenverbindung zwischen dem Lagerkompartiment (7) und dem Aufnahmebereich (2) ermöglicht ist, wobei insbesondere vorgesehen ist, dass der Auftragungsbereich (8) aus Organza gebildet ist, und wobei vorzugsweise vorgesehen ist, dass das Lagerkompartiment (7) vom Auftragungsbereich (8) begrenzt wird.

12. Kosmetikbehältnis nach Anspruch einem der Ansprüche 9 bis 11, **dadurch gekennzeichnet, dass** der Applikator (6) als Pad ausgebildet ist, wobei der die Atmosphärenverbindung ermöglichende Auftragungsbereich (8) eine Auftragungsseite des Pads bildet, wobei insbesondere vorgesehen ist, dass eine dem Auftragungsbereich (8) gegenüberliegende Halteseite vorgesehen ist, wobei an der Halteseite vorzugsweise ein Griff (10) angeordnet ist.

13. Kosmetikbehältnis nach Anspruch 11 oder 12, **dadurch gekennzeichnet, dass** im Applikator-Inneren ein weiterer Aufnahmebereich (11) zur Aufnahme einer Flüssigkeit oder einer flüssigen oder halbfesten Zubereitung vorgesehen ist, wobei der weitere Aufnahmebereich (11) durch eine weitere, insbesondere für die Flüssigkeit oder die Zubereitung permeable, Schicht (9) vom Lagerkompartiment (7) getrennt ist.

14. Kosmetikbehältnis nach einem der Ansprüche 11 bis 13, **dadurch gekennzeichnet, dass** der Applikator (6), insbesondere als weitere Schicht (9), eine formstabile Verstärkung aufweist.

15. Kosmetikbehältnis nach einem der Ansprüche 9 bis 14, **dadurch gekennzeichnet, dass** das Kosmetikbehältnis als Applikator (6), insbesondere als Pad, ausgebildet ist, wobei der Applikator (6) einen Auftragungsbereich (8) aufweist, der insbesondere aus Organza besteht, wobei das Lagerkompartiment (7) im Applikator-Inneren direkt an den Auftragungsbereich (8) angrenzend angeordnet ist, wobei auf der dem Auftragungsbereich (8) abgewandten Seite des Lagerkompartiments (7) eine permeable Schicht (9), insbesondere eine Verstärkung, angeordnet ist, wobei auf der dem Lagerkompartiment (7) gegenüberliegenden Seite der permeablen Schicht (9) der Aufnahmebereich (2) angeordnet ist, wobei der Aufnahmebereich (2) komprimierbar ausgebildet ist, wobei im Aufnahmebereich (2) eine flüssige oder halbfeste Zubereitung angeordnet ist, und wobei die permeable Schicht (9) derart ausgebildet ist, dass sie bei Kompression des Aufnahmebereichs (2) für die flüssige oder halbfeste Zubereitung durchlässig ist.
